Europäisches Patentamt

European Patent Office

Office européen des brevets

(19)

(11) Veröffentlichungsnummer: **0 026 242**
**A1**

(12) # EUROPÄISCHE PATENTANMELDUNG

(21) Anmeldenummer: 79104606.3

(22) Anmeldetag: 20.11.79

(51) Int. Cl.³: **F 16 D 1/08**

(30) Priorität: 28.09.79 DE 2939261

(43) Veröffentlichungstag der Anmeldung:
08.04.81 Patentblatt 81/14

(84) Benannte Vertragsstaaten:
FR GB IT

(71) Anmelder: Peter, Oskar E.
Schloss-Strasse 9/1
D-7129 Brackenheim(DE)

(72) Erfinder: Peter, Oskar E.
Schloss-Strasse 9/1
D-7129 Brackenheim(DE)

(72) Erfinder: Peter, Lothar
Wagnerstrasse 8
D-7129 Güglingen(DE)

(74) Vertreter: Patentanwälte Dipl.-Ing. W. Scherrmann
Dr.-Ing. R. Rüger et al,
Webergasse 3
D-7300 Esslingen(DE)

(54) Spannsatz in Doppelausführung mit Zentrierung zur Nabenbefestigung.

(57) Bei einem aus einem Innenspannring (1) mit entgegengesetzten Außenkegelflächen und einem zu diesem in radialem Abstand angeordneten Außenspannring (2) mit entgegengesetzten Innenkegelflächen bestehenden Spannsatz in Doppelausführung mit Zentrierung zur Nabenbefestigung sind die Spannringe (1, 2) durch beidseitig achsparallel eingesetzte doppelkegelige Druckringe (3, 3a) mit korrespondierenden Kegelflächen beaufschlagt. Die Druckringe (3, 3a) sind mittels Innensechskantspannschrauben (5) zusammengehalten und spannbar, die den einen Druckring (3) in Durchgangsbohrungen und den anderen Druckring (3a) in Gewindebohrungen durchdringen. Die doppelkegeligen Druckringe (3, 3a) weisen an ihren äußeren Enden angedrehte Zentrieransätze (3b) auf.

Zur Vermeidung eines Verkantens der Zentrieransätze (3b) der Druckringe (3, 3a) während des Spannens weisen die Zentrieransätze (3b) der beidseitig angeordneten Druckringe (3, 3a) innen und außen bogenförmige Mantelflächen (3c) auf.

Fig.1

Patentanwälte Dipl.-Ing. W. Scherrmann Dr.-Ing. R. Rüger

7300 Esslingen (Neckar), Webergasse 3, Postfach 348

PA 33 EU naeh

Telefon
Stuttgart (07 11) 35 65 39
                    35 96 19
Telex    07 256610 smru
Telegramme Patentschutz
Esslingenneckar

- 1 -

Oskar E. Peter, Schloß-Str. 9/1,
D-7129 Brackenheim/Württ.

Spannsatz in Doppelausführung mit Zentrierung
zur Nabenbefestigung

Die Erfindung bezieht sich auf einen Spannsatz in
Doppelausführung mit Zentrierung zur Nabenbefestigung, bestehend aus einem Innenspannring
mit entgegengesetzten Außenkegelflächen und
einem zu diesem in radialem Abstand angeordneten
Außenspannring mit entgegengesetzten Innenkegelflächen, wobei beidseitig achsparallel eingesetzte doppelkegelige Druckringe mit korrespondierenden Kegelflächen die Spannringe beaufschlagen und die Druckringe mittels Innensechskantspannschrauben, die den einen Druckring in Durchgangsbohrungen und den anderen Druckring in Gewindebohrungen durchdringen, zusammengehalten
werden und spannbar sind, wobei die doppelkegeligen Druckringe an ihren äußeren Enden angedrehte Zentrieransätze aufweisen.

Spannsätze der oben genannten Art ermöglichen
die ein Drehmoment übertragende Befestigung einer
Nabe auf einer Welle.

Es ist ein Spannsatz gemäß dem Oberbegriff des Patentanspruches 1 bekannt (deutsches Gebrauchsmuster 7 000 272). Dieser bekannte Spannsatz weist an den doppelkegeligen Druckringen gedrehte Zentrierringe auf, die sich jedoch beim Spannen mittels der planetenartig angeordneten Innensechskantspannschrauben zwischen der Welle und der Nabenbohrung verkanten, so daß die sich aus dem Anzugsmoment der Spannschrauben ergebende axiale Spannkraft und hieraus resultierend das übertragbare Drehmoment zum Teile verlorengehen. Ferner werden das Tragbild und die Rundlaufgenauigkeit des Spannsatzes ungünstig beeinflußt.

Hier will die Erfindung Abhilfe schaffen. Die Erfindung, wie sie in den Ansprüchen gekennzeichnet ist, löst die Aufgabe, einen Spannsatz der eingangs genannten bekannten Art derart zu verbessern, daß ein Verkanten der Zentrierringe an den Druckringen vermieden wird.

Die durch die Erfindung erreichten Vorteile bestehen im wesentlichen darin, daß beim Spannen des Spannsatzes mittels der Innensechskantspannschrauben die bogenförmigen Zentrieransätze der doppelkegeligen Druckringe zwischen der Welle und der Nabenbohrung kardanbeweglich gleiten und dadurch das nachteilige Verkanten der beidseitig angeordneten doppelkegeligen Druckringe mit zylindrischen Zentrieransätzen vermieden wird, so daß es zu einer Steigerung des übertragbaren Drehmomentes, einer Verbesserung des Tragbildes und einer Erhöhung der Rundlaufgenauigkeit des Spannsatzes kommt.

Durch die vorteilhafte Ausgestaltung der Erfindung nach Anspruch 2 wird erreicht, daß der Spannsatz in Doppelausführung nach erfolgtem Einbau den Ringraum zwischen Welle und Nabe dicht abschließt, so daß Schmutz, Feuchtigkeit und andere Fremdkörper in das Innere der Spannsatzverbindung nicht eindringen können und hintergeschaltete Kugel- oder Rollenlager vor der Zerstörung verschont bleiben, wodurch die Betriebssicherheit der Maschine erhöht wird. Nach einer weiteren Ausgestaltung des erfindungsgemäßen Spannsatzes nach Anspruch 3 in Verbindung mit Anspruch 2 steht in vorteilhafter Weise ein Spannsatz zur Verfügung, der für Spezialmaschinen der chemischen Industrie einsetzbar ist, wo ein Eindringen von Säuren, Chemikalien od.dgl. in das Innere der Spannverbindung verhindert werden muß.

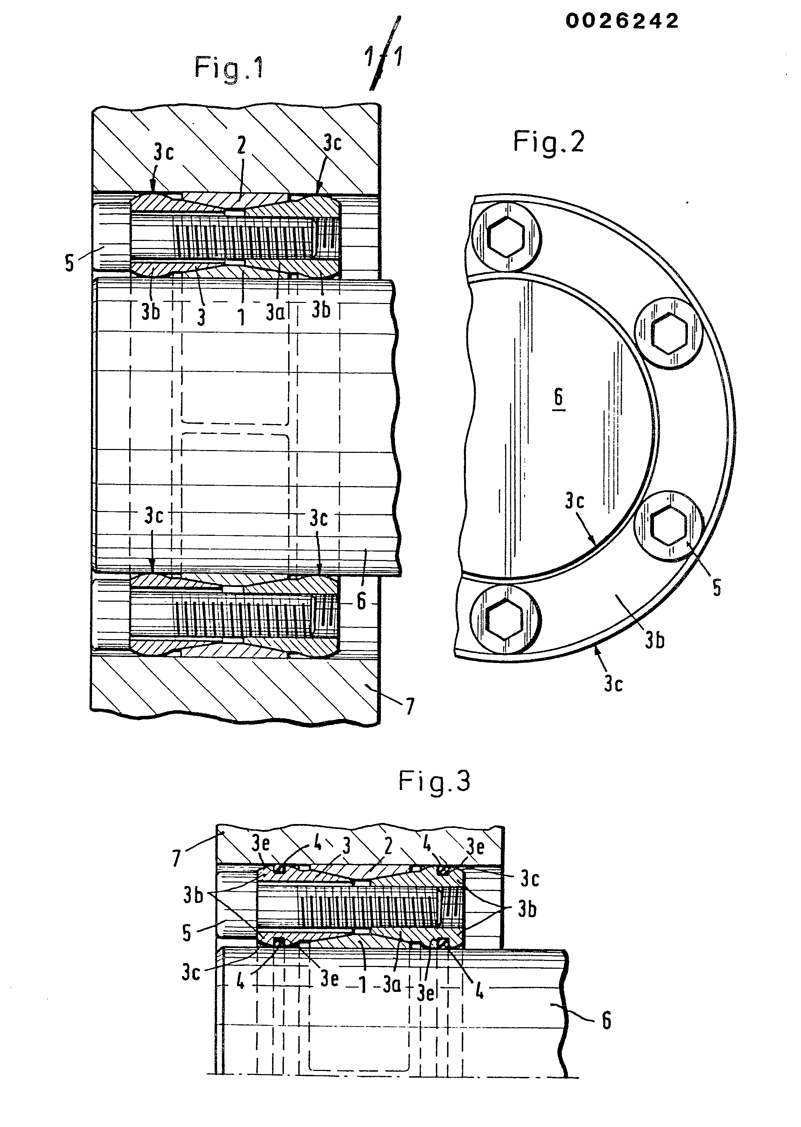

In der Zeichnung sind zwei Ausführungsbeispiele des Gegenstandes der Erfindung dargestellt. Es zeigen
Figur 1 einen erfindungsgemäßen Spannsatz in Doppelausführung mit beidseitig eingesetzten doppelkegeligen Druckringen mit bogenförmigen Zentrieransätzen in einem axialen Schnitt, Figur 2 den Spannsatz nach Figur 1 in einer Vorderansicht und in einer Teildarstellung und Figur 3 eine andere Ausführungsform des erfindungsgemäßen Spannsatzes, bei dem die bogenförmigen Zentrieransätze der Druckringe umlaufende Nuten zur Halterung von Dichtungsringen aufweisen, in einem axialen Schnitt in einer Teildarstellung.

Der Spannsatz in Doppelausführung nach Figur 1 und 2 besteht aus einem geschlitzten Innenspannring 1 mit entgegengesetzten Außenkegelflächen und dem in radialem Abstand angeordneten geschlitzten Außenspannring 2 mit entgegengesetzten Innenkegelflächen. Zwischen den Spannringen 1 und 2 sind beidseitig Druckringe 3, 3a mit korrespondierenden Doppelkegelflächen und angedrehten Zentrieransätzen 3b mit bogenförmigen Mantelflächen 3c eingesetzt. Durch planetenartig angeordnete Innensechskantspannschrauben 5, die den Druckring 3 mit Zentrieransatz 3b in Durchgangsbohrungen und den Druckring 3a mit Zentrieransatz 3b in Gewindebohrungen durchdringen, wird der Spannsatz zu einer einbaufertigen Einheit zusammengehalten und ist spannbar. Der Spannsatz sitzt zwischen einer Welle 6 und einer Nabe 7.

Der Spannsatz nach Figur 3 weist die gleichen Bestandteile auf wie derjenige nach Figur 1 und 2, und diese tragen auch die gleichen Bezugszeichen. Die bogenförmigen Mantelflächen 3c der Zentrieransätze 3b weisen jedoch zusätzlich innen und außen Nuten 3e zur Halterung von Dichtungsringen 4 auf.

Die Arbeitsweise der Spannsätze nach Figur 1, 2 und 3 ist folgende: Nachdem der Spannsatz zwischen der Welle 6 und der Nabe 7 eingesetzt worden ist, werden die planetenartig angeordneten Innensechskantspannschrauben 5 mittels eines Drehmomentschlüssesls nach und nach über Kreuz entsprechend dem vorgeschriebenen Anzugsmoment angezogen, wodurch in Funktionsverbindung mit den beidseitig angeordneten doppelkegeligen Druckringen 3, 3a mit den angedrehten bogenförmigen Zentrieransätzen 3b, 3c der geschlitzte Innenspannring 1 radial spielfrei auf die Welle 6 gepreßt und der geschlitzte Außenspannring 2 spielfrei an die Bohrung der Nabe 7 gespannt wird zur Durchleitung beachtlicher Drehmomente. Beim Lösen der Innensechskantspannschrauben 5 wird die Klemmwirkung der Spannringe 1 und 2 aufgehoben, und der Spannsatz kann mittels nicht dargestellter Abzugsschrauben entfernt werden.

Patentansprüche:

1. Spannsatz in Doppelausführung mit Zentrierung zur Nabenbefestigung, bestehend aus einem Innenspannring (1) mit entgegengesetzten Außenkegelflächen und einem zu diesem in radialem Abstand angeordneten Außenspannring (2) mit entgegengesetzten Innenkegelflächen, wobei beidseitig achsparallel eingesetzte doppelkegelige Druckringe (3, 3a) mit korrespondierenden Kegelflächen die Spannringe (1, 2) beaufschlagen und die Druckringe (3, 3a) mittels Innensechskantspannschrauben (5), die den einen Druckring (3) in Durchgangsbohrungen und den anderen Druckring (3a) in Gewindebohrungen durchdringen, zusammengehalten werden und spannbar sind, wobei die doppelkegeligen Druckringe (3, 3a) an ihren äußeren Enden angedrehte Zentrieransätze (3b) aufweisen, dadurch gekennzeichnet, daß die Zentrieransätze (3b) der beidseitig angeordneten doppelkegeligen Druckringe (3, 3a) innen und außen bogenförmige Mantelflächen (3c) aufweisen.

2. Spannsatz nach Anspruch 1, dadurch gekennzeichnet, daß die bogenförmigen Mantelflächen (3c) der Zentrieransätze (3b) der doppelkegeligen Druckringe (3, 3a) umlaufende Nuten (3e) zur Halterung von Dichtungsringen (4) aus einem öl- und säurebeständigen Gummi- oder Kunststoffwerkstoff enthalten.

3. Spannsatz nach Anspruch 1 und 2, dadurch gekennzeichnet, daß die doppelkegeligen Druckringe (3, 3a) aus säurebeständigem Stahl bestehen.

Fig.1

0026242

1/1

Fig.2

Fig.3

# Europäisches Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A - 2 017 149 (RINGFEDER GMBH) <br> * Anspruch 4; Fig. 2 und 3 * <br> -- | 1 |
| A | DE - C - 1 183 746 (O.E. PETER) <br> * ganzes Dokument * <br> -- | |
| A | DE - B - 1 261 710 (O.E. PETER) <br> * ganzes Dokument * <br> -- | |
| A,D | DE - U - 7 000 272 (O.E. PETER) <br> * ganzes Dokument * <br> ---- | |

### KLASSIFIKATION DER ANMELDUNG (Int. Cl.³)

F 16 D    1/08

### RECHERCHIERTE SACHGEBIETE (Int. Cl.³)

F 16 B    2/00

F 16 B    7/00

F 16 D    1/00

### KATEGORIE DER GENANNTEN DOKUMENTE

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 12-12-1980 | BECKER |